# EUROPÄISCHE PATENTANMELDUNG

(11) **EP 1 026 841 A2**
(43) Veröffentlichungstag der Anmeldung: **09.08.2000**
(21) Anmeldenummer: 00440013.1
(22) Anmeldetag: 21.01.2000
(51) Int. Cl.: H04B 10/18

(54) **Sendemodul für den Einsatz in einem Dispersionsunterstützten Übertragungssystem sowie Dispersionsunterstütztes Übertragungssystem**

(30) Priorität: 03.02.1999 DE 19904248
(71) Anmelder: ALCATEL, 75008 Paris (FR)
(72) Erfinder: Wedding, Berthold Dr., 70825 Korntal-Münchingen (DE)
(74) Vertreter: Rausch, Gabriele, Dr.

(57) **Zusammenfassung**

Es wird ein Sendemodul für den Einsatz einem DST Übertragungssystem vorgeschlagen, daß aus einem direktmodulierten Halbleiterlaser mit einem ersten transienten Chirpfaktor und einem optischen Verstärker mit einem zweiten transienten Chirpfaktor besteht wobei sich die beiden Faktoren gegenseitig aufheben.

## Beschreibung

Die Erfindung geht aus von einem Sendemodul für den Einsatz in einem DST Übertragungssystem sowie von einem DST Übertragungssystem nach der Gattung der unabhängigen Ansprüche. Das Prinzip der Dispersion supported Transmission ist beispielsweise aus der EP 0 554 736 B1 bekannt. Bei der DST Methode wird ein frequenzmoduliertes Signal am Sender erzeugt. Zur Umwandlung in ein amplitudenmoduliertes Signal, das am Empfänger ausgewertet wird, wird die Faserdispersion der Übertragungsstrecke ausgenutzt. Wird der Frequenzhub so eingestellt, daß nach der Übertragung über die Faserstrecke die Wellen mit der höheren Frequenz um etwa eine Bitperiode früher ankommen als die Wellen mit der niedrigeren Frequenz, so entsteht am Empfänger ein dreistufiges Signal. Durch einfache Filterung kann aus diesem Signal das ursprüngliche Sendesignal wieder gewonnen werden. Für Übertragungssysteme dieser Art werden Halbleiterlaser als Sendequelle eingesetzt. Die dabei verwendeten Halbleiterlaser können für die Verwendung des DST Verfahrens, das frequenzmodulierte Signale voraussetzt direkt moduliert werden. Dabei wird durch Änderung des Laserdiodenstroms neben einer Leistungsänderung auch eine Änderung der optischen Emissionsfrequenz verursacht. Der Temperatureffekt ist erheblich für DST. Mit dem Laserstrom ändert sich die Ladungsträgerkonzentration damit der Brechungsindex und damit die Wellenlänge (schneller elktronischer Effekt). Dieser Anteil der Änderung der Emisionsfrequenz folgt der Änderung der Leistung adiabatisch. Ein zweiter Effekt ergibt sich bei Laserdioden deren Stärke durch den Linienverbreitungsfaktor α auch Chirpfaktor α genannt, angegeben wird. Dieser transiente Chirpfaktor α hängt zeitlich mit der Änderung der Laserleistung zusammen und bewirkt für die Übertragung imDST Übertragungssystem einen unerwünschten Beitrag für die Verschiebung der Frequenz. Aus der Veröffentlichung Chirp Control of Optical Signal Using Semiconductors Optical Amplifier, T Watanabe et al. OECC 98, Seite 86 ist eine Methode zur Kontrolle von Chirpfaktoren bekannt. In diesem Dokument wird der positive Chirpfaktor eines Elektroabsorptionsmodulators mit Hilfe eines optischen Halbleiterverstärkers in ein negatives Chirpsignal gewandelt. Dabei wird ein Verstärker verwendet, der in der Sättigung betrieben wird und der durch Phasenmodulation mit dem Eingangssignal den Chirpfaktor ins Negative umkehrt.

Aufgabe der Erfindung ist es, ein Sendemodul für die Übertragung von DST Signalen zu schaffen, das einen möglichst kleinen transienten Chirpfaktor aufweist. Das erfindungsgemäße Sendemodul mit den kennzeichnenden Merkmalen des unabhängigen Anspruchs weist den Vorteil auf, daß ein Halbleiterlaser direkt moduliert wird und aufgrund dieser direkten Modulation ein erster Chirpfaktor auftritt, der durch den optischen Halbleiterverstärker mit einem zweitenChirpfaktor weitgehend kompensiert wird. Durch diese einfache Anordnung aus Halbleiterlaser mit Direktmodulation und optischen Halbleiterverstärker wird ein einfaches Sendemodul für den Einsatz in einem DST Verfahren vorgeschlagen.Durch diesen einfachen Aufbau des Sendemoduls bestehend aus Laser und optischem Halbleiterverstärker ist es möglich den transienten Chirp in einem Sender für das DST Verfahren zu minimieren. Dies ermöglicht eine bessere Übertragungsqualität, da Intersymbolinterferenzen reduziert werden, der "Penalty Peak" bei kurzen Entfernungen reduziert wird sowie der Modulationsindex vergrößert werden kann, wobei die Empfindlichkeit des Empfängers erhöht werden kann.

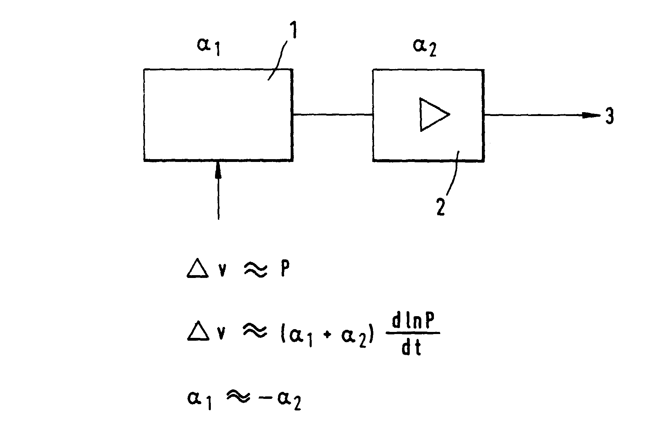

Ein Ausführungsbeispiel des erfindungsgemäßen Sendemoduls zeigt Fig. 1. Ein Halbleiterlaser 1 ist über eine optische Verbindung mit einem optischen Halbleiterverstärker 2 verbunden. Der Ausgang des optischen Halbleiterverstärkers ist mit der Übertragungsleitung 3 des DST Übertragungssystems verbunden. Der Halbleiterlaser 1 weist einen ersten Chirpfaktor α₁ auf. Der optische Halbleiterverstärker 2 weist einen zweiten Chirpfaktor α₂ auf. Wird der Laser 1 direkt frequenzmoduliert indem der Steuerstrom des Lasers moduliert wird, erhält man in erster Linie eine adiabatische Frequenzänderung der Ausgangswellenlänge. Zusätzlich tritt allerdings der transiente Chirpfaktor α₁ auf, der eine DST Übertragung stört. Der Ausgang des Lasers ist mit dem Eingang des optischen Halbleiterverstärkers verbunden. Der optische Halbleiterverstärker wird in der Verstärkungssättigung betrieben wobei die Größe des Chirpfaktors von der optischen Eingangsleistung abhängt. Durch Erhöhen der optischen Eingangsleistung des Halbleiterverstärkers nimmt der Chirpfaktor negative Werte an. Das Ziel ist es, die beiden Chirpfaktoren der beiden Komponenten zu minimieren. Der Chirpfaktor eines bestimmten Halbleiterlasers liegt fest, so daß eine Reduktion auf Null durch einen negativen Chirpfaktor geschaffen werden muß. Der optische Haltleiterverstärker weist negative Chirpfaktoren im Bereich hoher optischer Eingangsleistungen auf, wenn er in der Verstärkungssättigung arbeitet. Durch die Wahl der geeigneten Eingangsleistung wird ein negativer Chirpfaktor des Halbleiterverstärkers festgelegt und mit dessen Hilfe der definierte positive Chirpfaktor des Halbleiterlasers ausgeglichen.

## Patentansprüche

1. Sendemodul für den Einsatz in einem DST (Dispersion Supported Transmission) Übertragungssytem, bestehend aus einem direkt modulierten Halbleiterlaser mit einem ersten transienten Chirpfaktor und einem optischen Verstärker mit einem zweiten Chirpfaktor, wobei die beiden Faktoren sich gegenseitig aufheben.

2. Sendemodul nach Anspruch 1 dadurch gekennzeichnet, daß der Chirpfaktor des optischen Verstärkers durch Regelung der optischen Eingangsleistung anpaßbar ist.

3. DST- Übertragungssystem bestehend aus einem Sendemodul, einer bei der Übertragungswellenlänge dispersionsbehafteten Übertragungsstrecke und einem Empfänger, dadurch gekennzeichnet daß der transiente Chirpfaktor des Lasers durch die Verstärkung mit einem optischen Verstärker unterdrückt wird, während der adiabatische Chirpfaktor zur DST-Übertragung des Datensignals dient.
